# EUROPEAN PATENT APPLICATION

(11) **EP 4 525 256 A1**
(43) Date of publication of application: **19.03.2025**
(21) Application number: 23196736.5
(22) Date of filing: 12.09.2023
(51) Int. Cl.: H02J 7/00, E21B 7/02, H02J 7/02

(54) **A BATTERY POWER SYSTEM FOR A MOBILE MINING DRILL RIG AND A MOBILE MINING DRILL RIG**

(71) Applicant: Sandvik Mining and Construction Oy, 33330 Tampere (FI)
(72) Inventor: KORVA, Timo, 33330 Tampere (FI); TIIHONEN, Tommi, 33330 TAMPERE (FI); VIRTANEN, Valtteri, 33330 Tampere (FI); HAKALA, Markus, 33330 Tampere (FI); JUNTUNEN, Raimo, 33330 Tampere (FI); VIHTANEN, Hannu, 33330 Tampere (FI)
(74) Representative: Sandvik

(57) **Abstract**

A battery power system for a mobile mining drill rig is disclosed. The disclosed battery power system allows battery-powering a mobile mining drill rig with a drilling motor and a separate tramming motor.

## Description

### TECHNICAL FIELD

The present disclosure relates to the field of electrically powered mining vehicles, and, more particularly, to battery powered drilling.

### BACKGROUND

Battery-powered industrial machines, such as mining machines, are a new and developing technology.

Typically, a battery-powered mobile mining drill rig has a common electric motor for both driving and drilling.

However, at least in some situations, it may be beneficial to have separate motors, that is, a first motor for driving and a second motor for drilling. For example, such separate driving and drilling motors may allow more flexible use of components in different-sized machines. Yet, a disadvantage of having the separate driving and drilling motors is that it is more complicated to arrange battery powering for them in a convenient and efficient way.

Accordingly, there is a need for a convenient and efficient battery power system for a mobile mining drill rig with separate driving (or tramming) and drilling motors.

### SUMMARY

The scope of protection sought for various example embodiments of the disclosure is set out by the independent claims. The example embodiments and features, if any, described in this specification that do not fall under the scope of the independent claims are to be interpreted as examples useful for understanding various example embodiments of the disclosure.

An example embodiment of a battery power system for a mobile mining drill rig comprises at least one battery configured to supply direct current, DC, electric energy. The battery power system for the mobile mining drill rig further comprises at least one inverter that is connected to the at least one battery. The at least one inverter is configured to convert the supplied DC electric energy to alternating current, AC, electric energy, and to supply the AC electric energy. The battery power system for the mobile mining drill rig further comprises a transformer that is connected to the at least one inverter. The transformer is configured to convert a voltage level of the supplied AC electric energy to an output voltage level suitable for at least one dedicated drilling power pack of the mobile mining drill rig. The transformer is further configured to supply the AC electric energy at the output voltage level to the at least one dedicated drilling power pack of the mobile mining drill rig.

In an example embodiment, alternatively or in addition to the above-described example embodiments, the battery power system is switchable between a charging mode for charging the at least one battery from a grid via the transformer and an inverter of the at least one inverter, and a battery-powered drilling mode for supplying the AC electric energy at the output voltage level to the at least one dedicated drilling power pack of the mobile mining drill rig.

In an example embodiment, alternatively or in addition to the above-described example embodiments, the at least one inverter comprises a first single-function inverter for the at least one dedicated drilling power pack of the mobile mining drill rig and a second single-function inverter for a dedicated tramming motor of the mobile mining drill rig.

In an example embodiment, alternatively or in addition to the above-described example embodiments, the at least one inverter is configured to be operated in an open-loop control mode such that in the battery-powered drilling mode the at least one inverter ramps up output voltage of the at least one inverter.

In an example embodiment, alternatively or in addition to the above-described example embodiments, the at least one inverter is configured to be operated in a closed-loop control mode.

In an example embodiment, alternatively or in addition to the above-described example embodiments, the battery power system further comprises an AC main switch allowing electric energy from the grid to be switched off when in the battery-powered drilling mode.

In an example embodiment, alternatively or in addition to the above-described example embodiments, the transformer is further configured to provide galvanic isolation between an AC side of the battery power system and a DC side of the battery power system.

In an example embodiment, alternatively or in addition to the above-described example embodiments, the battery power system is operable in a direct on line mode such that the inverter is configured to adjust at least one of a frequency and the voltage to target levels before connecting a dedicated drilling motor of the at least one dedicated drilling power pack to the grid.

In an example embodiment, alternatively or in addition to the above-described example embodiments, the transformer comprises an autotransformer.

An example embodiment of a mobile mining drill rig comprises a dedicated tramming motor. The mobile mining drill rig further comprises at least one dedicated drilling power pack including a dedicated drilling motor and at least one hydraulic pump. The mobile mining drill rig further comprises the battery power system according to the above-described example embodiments.

Many of the features will be more readily appreciated as they become better understood by reference to the following detailed description considered in connection with the accompanying drawings.

### DESCRIPTION OF THE DRAWINGS

The accompanying drawings, which are included to provide a further understanding of the embodiments and constitute a part of this specification, illustrate embodiments and together with the description help to explain the principles of the embodiments. In the drawings:
**FIG. 1** shows an example embodiment of a battery power system for a mobile mining drill rig; and
**FIG. 2** shows an example embodiment of a mobile mining drill rig.

Like reference numerals are used to designate like parts in the accompanying drawings.

### DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

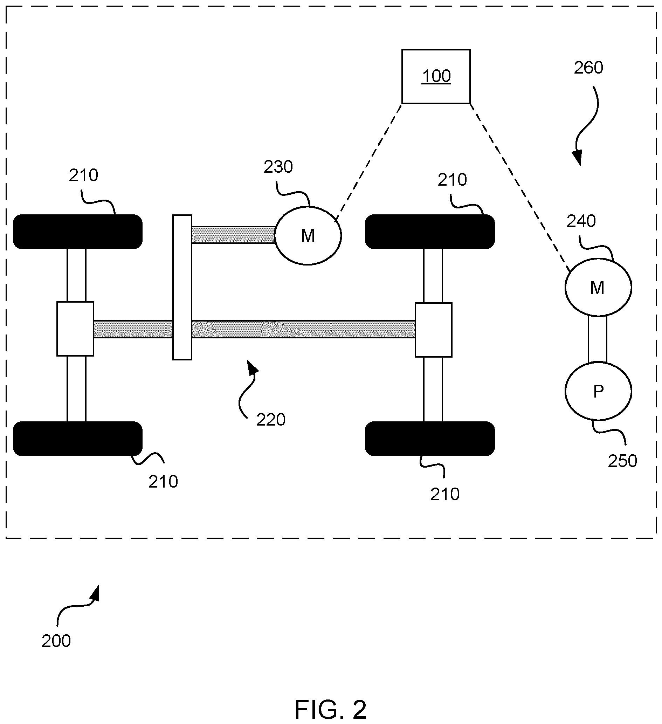

Fig. 2 illustrates an example mobile mining drill rig 200, where various embodiments of the present disclosure may be implemented. For example, the mobile mining drill rig 200 may include a rock drilling rig, a development drill, a tunneling drilling machine, a surface drilling machine, a support drill, or a long hole drill rig.

The mobile mining drill rig 200 may comprise structural body members, such tires or wheels 210 and/or an axle system 220.

The mobile mining drill rig 200 comprises a dedicated tramming motor 230. The mobile mining drill rig 200 further comprises at least one dedicated drilling power pack 260 that may include a dedicated drilling motor 240 (e.g., an induction motor) and at least one hydraulic pump 250. The mobile mining drill rig 200 further comprises a battery power system 100 described in more detail below.

In the following, various example embodiments will be discussed. At least some of these example embodiments may allow battery-powering a mobile mining drill rig 200 with a drilling motor (i.e., the dedicated drilling motor 240 of the at least one dedicated drilling power pack 260) and a separate tramming motor (i.e., the dedicated tramming motor 230). At least in some of these example embodiments, an inverter 120 may be used to feed energy from a battery/batteries 110 to power pack(s) 260 (e.g., an electric motor 240 and hydraulic pump(s) 250) through a transformer 130, and those power pack(s) 260 may be used for drilling. Some of the described features are optional features which may provide further advantages.

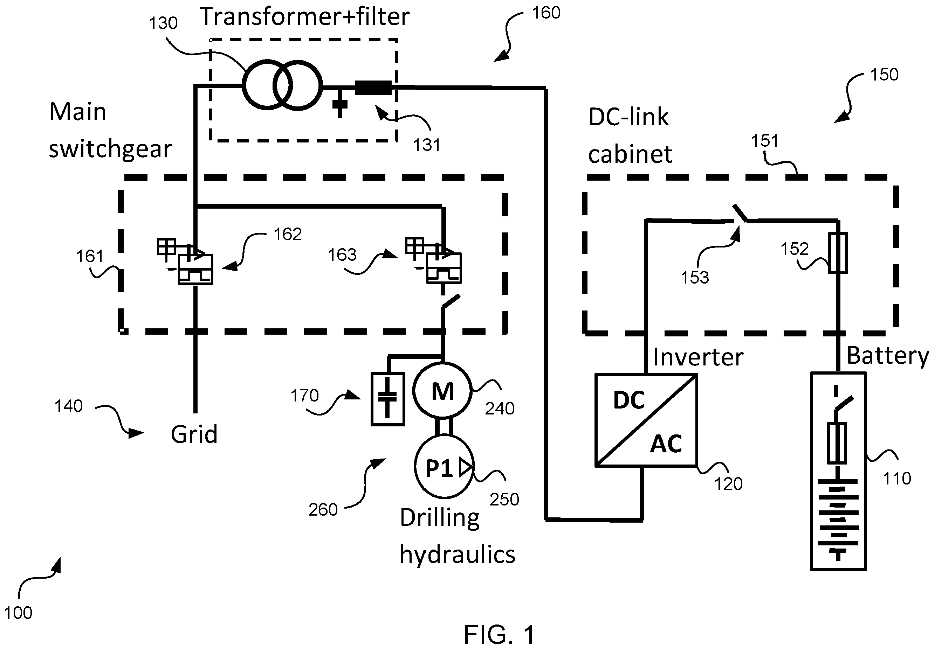

Fig. 1 is a block diagram of the battery power system 100 for the mobile mining drill rig 200, in accordance with an example embodiment.

The battery power system 100 for the mobile mining drill rig 200 comprises at least one battery 110 that is configured to supply direct current (DC) electric energy.

The battery power system 100 for the mobile mining drill rig 200 further comprises at least one inverter 120 that is connected to the at least one battery 110.

The at least one inverter 120 is configured to convert the supplied DC electric energy to alternating current (AC) electric energy, and to supply the AC electric energy.

The battery power system 100 for the mobile mining drill rig 200 further comprises a transformer 130 (e.g., a step-up transformer when viewed from the inverter 120 and a step-down transformer when view from a grid 140) that is connected to the at least one inverter 120.

At least in some embodiments, in battery drilling, there may be a need to be able to adjust a correct voltage for the drilling motor(s) 240. E.g., a drilling motor 240 may be a 690 V motor, but a high enough voltage cannot be created from the inverter 120 and the at least one battery 110 (e.g., only 400 V AC may be possible). Accordingly, the transformer 130 may be used to step up the voltage for such higher-voltage drilling motor(s) 240.

The transformer 130 is configured to convert a voltage level of the supplied AC electric energy to an output voltage level suitable for at least one dedicated (battery-powered) drilling power pack 260 of the mobile mining drill rig 200.

The transformer 130 is further configured to supply the AC electric energy at the output voltage level to the at least one dedicated drilling power pack 260 of the mobile mining drill rig 200. At least in some embodiments, the transformer 130 may comprise an autotransformer.

At least in some embodiments, the battery power system 100 may be switchable between a charging mode for charging the at least one battery 110 from the grid 140 via the transformer 130 and an inverter of the at least one inverter 120, and a battery-powered drilling mode for supplying the AC electric energy at the output voltage level to the at least one dedicated drilling power pack 260 of the mobile mining drill rig 200.

At least in some embodiments, the at least one inverter 120 may comprise a first single-function inverter for the at least one dedicated drilling power pack 260 of the mobile mining drill rig 200 and a second single-function inverter for a dedicated tramming motor 230 of the mobile mining drill rig 200.

At least in some embodiments, the at least one inverter 120 may be configured to be operated in an open-loop control mode such that in the battery-powered drilling mode the at least one inverter 120 ramps up output voltage of the at least one inverter 120. For example, the at least one inverter 120 may ramp up the output voltage of the at least one inverter 120 in a linear manner, e.g., from 0 volt (V) and from above 0 hertz (Hz) to 400 V and 50 Hz in a linear ramp. Alternatively, the at least one inverter 120 may ramp up the output voltage of the at least one inverter 120 in a non-linear manner.

Alternatively, the at least one inverter 120 may be configured to be operated in a closed-loop control mode. Herein, open-loop generally indicates scalar control for speed control since there is no speed feedback from the motor, whereas closed-loop generally indicates there being feedback from the motor rotation speed.

At least in some embodiments, the battery power system 100 may further comprise an AC main switch 162 that allows electric energy from the grid 140 to be switched off when the battery power system 100 is in the battery-powered drilling mode.

At least in some embodiments, the transformer 130 may be further configured to provide galvanic isolation between an AC side 160 of the battery power system 100 and a DC side 150 of the battery power system 100, or, in other words, between an AC supply grid and a DC battery system. Herein, the galvanic isolation or separation refers to an insulation between two parts of an electrical system, which prevents the transfer of charge carriers between the two parts. In other words, no current flows between these two parts.

At least in some embodiments, the battery power system 100 may be operable in a direct on line (DOL) mode such that the inverter 120 is configured to adjust at least one of a frequency and the voltage to target levels before connecting a dedicated drilling motor 240 of the at least one dedicated drilling power pack 260 to the grid 140.

In other words, when the charging/supply transformer 130 of the rig 200 is used with the inverter 120 as described above, a microgrid may be created that may be used for the at least one dedicated drilling power pack 260. When battery drilling is started, the inverter 120 may be operated in a scalar control mode (i.e., a U/f curve). That is, the inverter 120 output voltage and frequency may be ramped up while contactors of the dedicated drilling motor(s) 240 are on. For safety reasons, the AC main switch 162 may be off to allow this mode of operation. At least in some embodiments, the voltage ratio of the transformer 130 may enable a correct level of voltage for the motor(s) 240.

In yet other words, the inverter 120 may be controlled in a way that changes power flow direction so that energy is fed from the at least one battery 110 towards the transformer 130, thereby creating an isolated micro grid when the grid supply 140 is switched off, thereby being able to supply the drilling (e.g., induction) motor(s) 240 (normally grid connected), thereby enabling battery powered drilling.

Thus, the inverter 120 may create the AC grid and then the drilling motor 240 may be connected to this inverter-created AC grid.

At least in some embodiments, the mobile mining drill rig 200 may be connected to the AC grid via a trailing cable, and the inverter 120 may be synchronized to this voltage. The drilling motor 240 of the power pack 260 may be started from a utility grid (via the trailing cable connection), which then may be turned off and the supply of the drilling motor 240 of the power pack 260 may transfer solely to the inverter 120 feeding energy from the at least one battery 110 via the transformer 130. This embodiment may also serve fault ride through purposes. If the grid goes down, a cable switch disconnector or the like may be turned off and the mobile mining drill rig 200 may continue with battery operation, possibly with no interruption.

At least in some embodiments, the battery power system 100 may further comprise, e.g., a main switchgear 161 on the AC side 160, a DC-link cabinet 151 on the DC side 150, a disconnector switch 153, a DC-side load 152, a starter block 163 for the drilling motor 240, a compensating capacitor 170, and/or a filter 131 (e.g., a choke and a capacitor, used for charging).

At least in some embodiments, the at least one battery 110 may be further configured to provide an indication of current and voltage limits to be followed, and the inverter 120 may be further configured to convert the current and voltage levels of the supplied AC electric energy up to the respective output current and voltage levels in accordance of the indicated current and voltage limits. In other words, the battery power system 100 may be configured to send out signals about current and voltage limits (i.e., power available from the at least one battery 100), and the drilling power may be limited according to those signals.

Any range or device value given herein may be extended or altered without losing the effect sought. Further, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of example embodiments. Although various embodiments have been described above with a certain degree of particularity, or with reference to one or more individual embodiments, those skilled in the art could make numerous alterations to the disclosed embodiments without departing from the scope of this specification.

## Claims

1. A battery power system (100) for a mobile mining drill rig (200), comprising:
at least one battery (110) configured to supply direct current, DC, electric energy;
at least one inverter (120) connected to the at least one battery (110), and configured to convert the supplied DC electric energy to alternating current, AC, electric energy, and to supply the AC electric energy; and
a transformer (130) connected to the at least one inverter (120),
wherein the transformer (130) is configured to:
convert a voltage level of the supplied AC electric energy to an output voltage level suitable for at least one dedicated drilling power pack (260) of the mobile mining drill rig (200); and
supply the AC electric energy at the output voltage level to the at least one dedicated drilling power pack (260) of the mobile mining drill rig (200) .

2. The battery power system (100) according to claim 1, wherein the battery power system (100) is switchable between a charging mode for charging the at least one battery (110) from a grid (140) via the transformer (130) and an inverter of the at least one inverter (120), and a battery-powered drilling mode for supplying the AC electric energy at the output voltage level to the at least one dedicated drilling power pack (260) of the mobile mining drill rig (200).

3. The battery power system (100) according to claim 1 or 2, wherein the at least one inverter (120) comprises a first single-function inverter for the at least one dedicated drilling power pack (260) of the mobile mining drill rig (200) and a second single-function inverter for a dedicated tramming motor (230) of the mobile mining drill rig (200).

4. The battery power system (100) according to any one of claims 2 to 3, wherein the at least one inverter (120) is configured to be operated in an open-loop control mode such that in the battery-powered drilling mode the at least one inverter (120) ramps up output voltage of the at least one inverter (120).

5. The battery power system (100) according to any one of claims 2 to 3, wherein the at least one inverter (120) is configured to be operated in a closed-loop control mode.

6. The battery power system (100) according to any one of claims 2 to 5, further comprising an AC main switch (162) allowing electric energy from the grid (140) to be switched off when in the battery-powered drilling mode.

7. The battery power system (100) according to any one of claims 1 to 6, wherein the transformer (130) is further configured to provide galvanic isolation between an AC side (160) of the battery power system (100) and a DC side (150) of the battery power system (100) .

8. The battery power system (100) according to any one of claims 2 to 7, wherein the battery power system (100) is operable in a direct on line mode such that the inverter (120) is configured to adjust at least one of a frequency and the voltage to target levels before connecting a dedicated drilling motor (240) of the at least one dedicated drilling power pack (260) to the grid (140).

9. The battery power system (100) according to any one of claims 1 to 8, wherein the transformer (130) comprises an autotransformer.

10. A mobile mining drill rig (200), comprising:
a dedicated tramming motor (230);
at least one dedicated drilling power pack (260) including a dedicated drilling motor (240) and at least one hydraulic pump (250);
the battery power system (100) according to any one of claims 1 to 9.
